# EUROPÄISCHE PATENTSCHRIFT

(11) **EP 2 790 530 B1**
(45) Veröffentlichungstag und Bekanntmachung des Hinweises auf die Patenterteilung: **18.07.2018**
(21) Anmeldenummer: 12801572.4
(22) Anmeldetag: 14.12.2012
(51) Int. Cl.: A23L 7/104, A23L 5/00, A23L 7/117

(54) **VERFAHREN ZUR HERSTELLUNG EINER ZERKLEINERTEN GETREIDESCHLEMPE**
METHOD FOR PRODUCING A GROUND FLOUR STILLAGE
PROCÉDÉ DE FABRICATION D'UNE DRÊCHE DE DISTILLERIE BROYÉE

(30) Priorität: 16.12.2011 EP 11193948; 23.01.2012 EP 12152144
(43) Veröffentlichungstag der Anmeldung: 22.10.2014
(73) Patentinhaber: Tölle, Marc, 40545 Düsseldorf (DE)
(72) Erfinder: Tölle, Marc, 40545 Düsseldorf (DE)
(74) Vertreter: dompatent von Kreisler Selting Werner - Partnerschaft von Patent- und Rechtsanwälten mbB
(86) Internationale Anmeldenummer: PCT/EP2012/075494
(87) Internationale Veröffentlichungsnummer: WO 2013/087818

(56) Entgegenhaltungen:
- EP-A2- 1 358 807
- WO-A1-01/10245
- WO-A1-2010/129512
- US-A1- 2007 231 311
- US-A1- 2009 227 004
- DATABASE WPI Week 201073 Thomson Scientific, London, GB; AN 2010-M13703 XP002675764, & CN 101 818 175 A (JIANGSU LVFENG BIOLOGY MEDICINE IND CO LTD) 1. September 2010 (2010-09-01)
- KRZYWONOS M ET AL: "Aerobic biodegradation of wheat stillage (distillery wastewater) at an elevated temperature@?Effect of solids separation", BIOCHEMICAL ENGINEERING JOURNAL, ELSEVIER, AMSTERDAM, NL, Bd. 49, Nr. 1, 15. März 2010 (2010-03-15), Seiten 1-6, XP026889218, ISSN: 1369-703X, DOI: 10.1016/J.BEJ.2009.11.003 [gefunden am 2009-11-14]
- ARORA A ET AL: "Nutrient recovery from the dry grind process using sequential micro and ultrafiltration of thin stillage", BIORESOURCE TECHNOLOGY, ELSEVIER BV, GB, Bd. 101, Nr. 11, 1. Juni 2010 (2010-06-01) , Seiten 3859-3863, XP026917415, ISSN: 0960-8524, DOI: 10.1016/J.BIORTECH.2009.12.127 [gefunden am 2010-02-06]
- John Sneeringer: "The Rotor/Stator Selection Dilemma", Adhesives & Sealants Industry, 1 August 2002 (2002-08-01), pages 1-3, XP055359225, Retrieved from the Internet: URL:http://www.adhesivesmag.com/articles/8 4932-the-rotor-stator-selection-dilemma [retrieved on 2017-03-27]

## Beschreibung

Die vorliegende Erfindung betrifft ein Verfahren zur Herstellung einer zerkleinerten Getreideschlempe, ein Fermentationsverfahren dieser zerkleinerten Getreideschlempe sowie die Verwendung der zerkleinerten und der fermentierten Getreideschlempe zur Herstellung von Nahrungsmitteln.

Verfahren zur Zerkleinerung von Getreideschlempen sind dem Fachmann aus dem Stand der Technik bekannt. So offenbart beispielsweise die DE 39 04 962 A1 eine kolloidale Vermahlung der Getreideschlempe mittels einer Kugelrührwerkmühle oder durch Ultraschall. Aus der WO 01/10245 A1 ist die Zerkleinerung der Getreideschlempe mittels eines Hochdruck-Homogenisators bekannt.

Bewährt hat sich in der Vergangenheit ebenfalls die Zerkleinerung der Getreideschlempe mit Hilfe von Steinscheibenmühlen, wie beispielsweise der Koruma-Steinscheibenmühle.

Im Regelfall wird die Getreideschlempe fermentiert eingesetzt. Für die Haltbarkeit des fermentierten Produktes ist es von entscheidender Bedeutung, dass die Keimzahl des fermentierten Produktes gering ist. Überraschenderweise wurde gefunden, dass das Zerkleinerungsverfahren Einfluss auf die Keimbelastung des Produktes hat.

Abhängig vom jeweiligen Zerkleinerungsverfahren, weist die zerkleinerte, fermentierte Getreideschlempe unterschiedliche Keimbelastungen auf. Diese liegen typischerweise bei 1900 Nichtsäurebildner pro Gramm. Hierbei bestehen die Nichtsäurebildner aus Laktose-negativen Bakterien sowie weitere bekannten Schmutz-Bakterien.

Aufgabe der vorliegenden Erfindung war es deshalb ein verbessertes Zerkleinerungsverfahren für Getreideschlempen bereitzustellen.

Gelöst wird die Aufgabe mittels eines Verfahrens umfassend die folgenden Schritte:
- Bereitstellen einer Getreideschlempe, und
- Zerkleinern der Getreideschlempe mittels einer Hoch-Scher-Pumpe bis die zerkleinerte Getreideschlempe Partikel mit einer d90-Partikelgröße zwischen 500 µm und 1200 µm und einer d10-Partikelgröße zwischen 50 µm und 200 µm aufweist.

Die so erhaltene zerkleinerte Getreideschlempe weist eine optimale Partikelgrößenverteilung auf. Es hat sich bei durchgeführten Studien herausgestellt, dass die Partikelgröße der Getreideschlempe einen direkten Einfluss auf den Grad der Sättigung und der Verdauungseigenschaft im menschlichen Organismus aufweist. So rufen beispielsweise Getreideschlempe-Partikel mit einer mittleren Partikelgröße im Bereich von 40 µm oder kleiner kein Sättigungsgefühl hervor, wohingegen die Getreideschlempe-Partikel mit o.g. d90- und d10-Partikelgrößen ein länger anhaltendes Sättigungsgefühl hervorrufen.

Zu große Partikel in der Getreideschlempe sind für ein störendes Mundgefühl verantwortlich und sollten daher möglichst weitgehend vermieden werden.

Es hat sich gezeigt, das bei der Fermentierung praktisch keine Korngrößenänderung in relevante Umfang eintreten, so dass die Effekte sowohl für die nichtfermentierte als auch für fermentierte Schlempe auftreten.

Die Partikelgrößen sind als Vol.-% angegeben, d.h bei einer d90-Partikelgröße sind 90 Vol.-% der Partikel kleiner als der genannte Wert und 10 Vol.-% größer als der genannte Wert. Bei einer d50-Partikelgröße sind 50 Vol.-% größer als der genannte d50-Wert, 50 Vol.-% kleiner als der genannte d50-Wert. Bei einem d10-Wert sind 90 Vol.-% größer als der angegebene Wert und 10 Vol.-% kleiner als der angegebene Wert.

Die Bestimmung der entsprechenden Partikelgrößen kann in besonders einfacher Weise durch ein Laserpartikelgrößen-Messgerät folgen, beispielsweise mit einem Messgerät Beckman Coulter LS 200.

Gemäß einer bevorzugten Ausführungsform weist die zerkleinerte Getreideschlempe Partikel mit einer d90-Partikelgröße zwischen 600µm und 1200µm, 750 µm und 850 µm und d10-Partikelgröße zwischen 50 µm und 100 µm oder 70 und 100 µm auf.

In einer weiteren Ausführungsform weist die zerkleinerte Getreideschlempe Partikel mit einer d50-Partikelgröße zwischen 200 µm und 300 µm auf, bevorzugt zwischen 250 µm und 300 µm auf, mehr bevorzugt zwischen 270 µm und 300 µm auf.

Überraschenderweise hat sich herausgestellt, dass die erfindungsgemäß zerkleinerte Getreideschlempe eine Keimbelastung unter 600 Nichtsäurebildner pro Gramm, vorzugsweise unter 500 Nichtsäurebildner pro Gramm, mehr bevorzugt unter 450 Nichtsäurebildner pro Gramm, und am meisten bevorzugt unter 250 Nichtsäurebildner pro Gramm aufweist. Hierdurch ergibt sich eine verbesserte Lagereigenschaft und eine längere Haltbarkeit der zerkleinerten Getreideschlempe.

Im Gegensatz zu anderen bewährten Verfahren, beispielsweise der Steinscheibenmühle, kann daher durch das erfindungsgemäße Verfahren eine deutlich geringere Keimbelastung erreicht werden, die auch zu einer geringer belasteten, fermentierten Getreideschlempe führt.

Vorzugsweise wird die Getreideschlempe mit einem Durchflussvolumen von mindestens 5.000 L/h, mehr bevorzugt mindestens 10.000 L/h durch die Hoch-Scher-Pumpe gepumpt.

Die Scher-Rate der Hoch-Scher-Pumpe beträgt vorzugsweise 40.000 s⁻¹ oder mehr, mehr bevorzugt 60.000 s⁻¹ oder mehr.

Gegenstand der vorliegenden Erfindung ist auch die zerkleinerte Getreideschlempe erhältlich durch das erfindungsgemäße Verfahren.

Ein weiterer Gegenstand der vorliegenden Erfindung ist ein Verfahren zur Herstellung einer fermentierten Getreideschlempe, welches dadurch gekennzeichnet ist, dass die zerkleinerte Getreideschlempe mit einer Joghurt- oder Butterei-Kultur angeimpften Milch vermischt und anschließend fermentiert wird, um eine fermentierte Getreideschlempe zu erhalten.

Vorzugsweise wird die Fermentierung entweder mit der Joghurtkultur angeimpften Milch bei einer Temperatur von 38 bis 48°C für 10 bis 20 Stunden oder mit der Butterei-Kultur angeimpften Milch bei einer Temperatur von 18 bis 24°C für 20 bis 30 Stunden fermentiert.

In einer weiteren Ausführungsform wird die fermentierte Getreideschlempe anschließend mit weiterer Milch oder Milchkonzentrat vermischt und auf eine Temperatur < 15°C gekühlt.

Gemäß einer bevorzugten Ausführungsform wird die fermentierte Getreideschlempe anschließend sprühgetrocknet.

Ein weiterer Gegenstand der vorliegenden Erfindung ist auch die fermentierte Getreideschlempe, erhältlich durch das weitere erfindungsgemäße Verfahren.

Die vorliegende Erfindung wird anhand der folgenden Beispiele näher erläutert.

### Beispiel 1:

Getreideschlempe wurde mittels einer Hochscher-Pumpe mit einem Durchflussvolumen von 7000 L mit einer Scher-Rate von 60000 s⁻¹ bei 2900 U/min zerkleinert.

Es ergaben sich folgende Eigenschaften:

| | |
|---|---|
| d10-Partikelgröße | 72,39 µm |
| d50-Partikelgröße | 197,1 µm |
| d90-Partikelgröße | 606,3 µm |

### Beispiel 2:

Die Getreideschlempe wurde mittels der Hoch-Scher-Pumpe mit einem Durchflussvolumen von 8000 L und der Scher-Rate ca. 50000 s⁻¹ bei 2900 U/min zerkleinert und anschließend mittels einer mit einer Joghurt-Kultur angeimpften Milch fermentiert. Die so zerkleinerte, fermentierte Getreideschlempe weist folgende Eigenschaften auf:

| | |
|---|---|
| d10-Partikelgröße | 81,3 µm |
| d50-Partikelgröße | 241,8 µm |
| d90-Partikelgröße | 803,2 µm |
| Nichtsäurebildner | 200 |
| Hefen/g | < 10 |
| Schimmel/g | < 10 |
| Coliforme Bakterien | negativ |
| Salmonellen | negativ |

### Vergleichsbeispiel:

Die Weizenschlempe wurde mittels einer Koruma-Steinscheibenmühle zerkleinert bis eine in etwa der erfindungsgemäß beanspruchten Partikelverteilung entsprechende Vermahlung erreicht wurde und anschließend wie im Beispiel 2 fermentiert. Die so zerkleinerte Getreideschlempe weist folgende Eigenschaften auf:

| | |
|---|---|
| d10-Partikelgröße | 79,6 µm |
| d50-Partikelgröße | 292,6 µm |
| d90-Partikelgröße | 954,5 µm |
| Nichtsäurebildner | 1900 |
| Hefen/g | < 10 |
| Schimmel/g | < 10 |
| Coliforme Bakterien | negativ |
| Salmonellen | negativ |

Bei Verwendung einer Steinscheibenmühle kommt es jedoch zu einer signifikanten Keimbelastung durch Nichtsäurebildner, die die Haltbarkeit des Produktes verschlechtert.

## Patentansprüche

1. Verfahren zur Herstellung einer zerkleinerten Getreideschlempe umfassend folgende Schritte:
- Bereitstellen einer Getreideschlempe, und
- Zerkleinern der Getreideschlempe mittels einer Hoch-Scher-Pumpe bis die zerkleinerte Getreideschlempe Partikel mit einer d90-Partikelgröße zwischen 500 µm und 1200 µm und einer d10-Partikelgröße zwischen 50 µm und 200 µm aufweist, um eine zerkleinerte Getreideschlempe zu erhalten.

2. Verfahren nach Anspruch 1, **dadurch gekennzeichnet, dass** die zerkleinerte Getreideschlempe Partikel mit einer d90-Partikelgröße zwischen 750 µm und 850 µm und einer d10-Partikelgröße zwischen 50 µm und 100 µm aufweist.

3. Verfahren nach Anspruch 1 oder 2, **dadurch gekennzeichnet, dass** die zerkleinerte Getreideschlempe Partikel mit einer d50-Partikelgröße zwischen 200 µm und 300 µm aufweist.

4. Verfahren nach einem der Ansprüche 1 bis 3, **dadurch gekennzeichnet, dass** die Getreideschlempe mit einem Durchflussvolumen von mindestens 5.000 L/h, vorzugsweise mindestens 10.000 L/h durch die Hoch-Scher-Pumpe gepumpt wird.

5. Verfahren nach einem der Ansprüche 1 bis 4, **dadurch gekennzeichnet, dass** die Scher-Rate der Hoch-Scher-Pumpe 40.000 s⁻¹ oder mehr, vorzugsweise 60.000 s⁻¹ oder mehr beträgt.

6. Zerkleinerte Getreideschlempe erhältlich durch ein Verfahren nach einem der Ansprüche 1 bis 5.

7. Verfahren zur Herstellung einer fermentierten Getreideschlempe, **dadurch gekennzeichnet, dass** die zerkleinerte Getreideschlempe nach Anspruch 6 anschließend mit einer Joghurt- oder Buttereikultur angeimpften Milch vermischt und anschließend fermentiert wird, um eine fermentierte Getreideschlempe zu erhalten.

8. Verfahren nach Anspruch 7, **dadurch gekennzeichnet, dass** die Fermentierung entweder mit der Joghurtkultur angeimpften Milch bei einer Temperatur von 38 - 48°C für 10 bis 20 Stunden oder mit der Buttereikultur angeimpften Milch bei einer Temperatur von 18 - 24°C für 20 - 30 Stunden fermentiert wird.

9. Verfahren nach einem der Ansprüche 7 bis 8, **dadurch gekennzeichnet, dass** die zerkleinerte, fermentierte Getreideschlempe eine Keimbelastung unter 600 Nichtsäurebildner pro Gramm, vorzugsweise unter 500 Nichtsäurebildner pro Gramm, mehr bevorzugt unter 400 Nichtsäurebildner pro Gramm, am meisten bevorzugt unter 250 Nichtsäurebildner pro Gramm aufweist.

10. Verfahren nach Anspruch 8 oder 9, **dadurch gekennzeichnet, dass** die fermentierte Getreideschlempe anschließend mit weiterer Milch oder Milchkonzentrat vermischt und auf eine Temperatur kleiner 15°C gekühlt wird.

11. Verfahren nach einem der Ansprüche 8 bis 10, **dadurch gekennzeichnet, dass** die fermentierte Getreideschlempe anschließend sprühgetrocknet wird.

12. Fermentierte Getreideschlempe erhältlich durch ein Verfahren nach einem der Ansprüche 8 bis 11.

13. Verwendung der fermentierten Getreideschlempe nach Anspruch 12 zur Herstellung von Nahrungsmitteln.

14. Verwendung der fermentierten Getreideschlempe nach Anspruch 12 zur Herstellung von trinkfertigen Erzeugnissen, Joghurt-Zubereitungen, Vollwert-Dessertspeisen, Müsli-Zubereitungen oder einrührfertigen Trockenprodukten.

15. Verwendung der zerkleinerten Getreideschlempe nach Anspruch 6 zur Herstellung von Nahrungsmitteln und/oder Nahrungsergänzungsmitteln, Tabletten, Snacks, Flocken oder Extrudaten.

## Claims

1. A method for producing comminuted distillers grains comprising the following steps:
- providing distillers grains; and
- comminuting the distillers grains by means of a high shear pump until the comminuted distillers grains have particles with a d90 particle size of from 500 µm to 1200 µm and a d10 particle size of from 50 µm to 200 µm, to obtain comminuted distillers grains.

2. The method according to claim 1, **characterized in that** the comminuted distillers grains have particles with a d90 particle size of from 750 µm to 850 µm, and a d10 particle size of from 50 µm to 100 µm.

3. The method according to claim 1 or 2, **characterized in that** the comminuted distillers grains have particles with a d50 particle size of from 200 µm to 300 µm.

4. The method according to any of claims 1 to 3, **characterized in that** the distillers grains are pumped through the high-shear pump with a volumetric flow rate of at least 5,000 l/h, preferably at least 10,000 l/h.

5. The method according to any of claims 1 to 4, **characterized in that** the shear rate of the high-shear pump is 40,000 s⁻¹ or more, preferably 60,000 s⁻¹ or more.

6. Comminuted distillers grains obtainable by a method according to any of claims 1 to 5.

7. A method for producing fermented distillers grains, **characterized in that** the comminuted distillers grains according to claim 6 are subsequently mixed with a milk seeded with a yoghurt or sour cream culture, followed by fermentation to obtain fermented distillers grains.

8. The method according to claim 7, **characterized in that** the fermentation is performed either with the milk seeded with yoghurt culture at a temperature of from 38 to 48 °C for 10 to 20 hours, or with the milk seeded with sour cream culture at a temperature of from 18 to 24 °C for 20 to 30 hours.

9. The method according to any of claims 7 to 8, **characterized in that** the comminuted and fermented distillers grains have a germ load of below 600 non-acid formers per gram, preferably below 500 non-acid formers per gram, more preferably below 400 non-acid formers per gram, and most preferably below 250 non-acid formers per gram.

10. The method according to claim 8 or 9, **characterized in that** the fermented distillers grains are subsequently mixed with more milk or milk concentrate, and cooled down to a temperature of lower than 15 °C.

11. The method according to any of claims 8 to 10, **characterized in that** the fermented distillers grains are subsequently subjected to spray drying.

12. Fermented distillers grains obtainable by a method according to any of claims 8 to 11.

13. Use of the fermented distillers grains according to claim 12 for preparing foods.

14. Use of the fermented distillers grains according to claim 12 for preparing ready-to-drink products, yoghurt formulations, wholefood dessert dishes, muesli formulations, or instant dry products.

15. Use of the comminuted distillers grains according to claim 6 for preparing foods and/or food supplements, tablets, snacks, flakes, or pellets.

## Revendications

1. Procédé de production de drêches de distillerie broyées, comprenant les étapes suivantes :
- fourniture de drêches de distillerie, et
- broyage des drêches de distillerie au moyen d'une pompe à fort cisaillement jusqu'à ce que
- les drêches de distillerie broyées présentent des particules ayant une taille de particules d90 entre 500 µm et 1 200 µm, et une taille de particules d10 entre 50 µm et 200 µm pour obtenir des drêches de distillerie broyées.

2. Procédé selon la revendication 1, **caractérisé en ce que** les drêches de distillerie broyées présentent des particules ayant une taille de particules d90 entre 750 µm et 850 µm et une taille de particules d10 entre 50 µm et 100 µm.

3. Procédé selon la revendication 1 ou 2, **caractérisé en ce que** les drêches de distillerie broyées présentent des particules ayant une taille de particules d50 entre 200 µm et 300 µm.

4. Procédé selon l'une des revendications 1 à 3, **caractérisé en ce que** les drêches de distillerie sont pompées par la pompe à fort cisaillement avec un volume de débit d'au moins 5 000 l/h, de préférence d'au moins 10 000 l/h.

5. Procédé selon l'une des revendications 1 à 4, **caractérisé en ce que** la vitesse de cisaillement de la pompe à fort cisaillement est égale ou supérieure à 40 000 s⁻¹, de préférence égale ou supérieure à 60 000 s⁻¹.

6. Drêches de distillerie broyées pouvant être obtenues par un procédé selon l'une des revendications 1 à 5.

7. Procédé de production de drêches de distillerie fermentées, **caractérisé en ce que** les drêches de distillerie broyées selon la revendication 6 sont mélangées avec un lait inoculé avec de la culture de yaourt ou de beurrerie et sont ensuite amenées à fermenter afin d'obtenir des drêches de distillerie fermentées.

8. Procédé selon la revendication 7, **caractérisé en ce que** la fermentation s'effectue soit avec le lait inoculé avec de la culture de yaourt à une température de 38 - 48 °C pendant 10 à 20 heures, soit avec le lait inoculé avec de la culture de beurrerie à une température de 18 - 24 °C pendant 20 à 30 heures.

9. Procédé selon l'une des revendications 7 à 8, **caractérisé en ce que** les drêches de distillerie broyées fermentées présentent une exposition aux germes inférieure à 600 agents non acidifiants par gramme, de préférence inférieure à 500 agents non acidifiants par gramme, plus préférablement inférieure à 400 agents non acidifiants par gramme, le plus préférablement inférieure à 250 agents non acidifiants par gramme.

10. Procédé selon la revendication 8 ou 9, **caractérisé en ce que** les drêches de distillerie fermentées sont mélangées avec du lait supplémentaire ou un concentré de lait et refroidies à une température inférieure à 15 °C.

11. Procédé selon l'une des revendications 8 à 10, **caractérisé en ce que** les drêches de distillerie fermentées sont ensuite séchées par pulvérisation.

12. Drêches de distillerie fermentées pouvant être obtenues par un procédé selon l'une des revendications 8 à 11.

13. Utilisation des drêches de distillerie fermentées selon la revendication 12 pour la production d'aliments.

14. Utilisations des drêches de distillerie fermentées selon la revendication 12 pour la production de produits buvables, de préparations pour yaourts, de desserts complets, de préparations pour céréales de type musli ou de produits secs prêts à être délayés.

15. Utilisation des drêches de distillerie broyées selon la revendication 6 pour la production d'aliments et/ou de compléments alimentaires, de comprimés, de collations, de flocons ou de produits d'extrusion.
